# EUROPÄISCHE PATENTSCHRIFT

(11) **EP 2 493 058 B1**
(45) Veröffentlichungstag und Bekanntmachung des Hinweises auf die Patenterteilung: **28.08.2013**
(21) Anmeldenummer: 11155650.2
(22) Anmeldetag: 23.02.2011
(51) Int. Cl.: H02K 7/102, F16H 57/02

(54) **Getriebemotor**
Gearmotor
Moteur à engrenages

(43) Veröffentlichungstag der Anmeldung: 29.08.2012
(73) Patentinhaber: Siemens Aktiengesellschaft, 80333 München (DE)
(72) Erfinder: Beiter, Roland, 72108, Rottenburg (DE); Filip, Andreas, 72127, Kusterdingen (DE)

(56) Entgegenhaltungen:
- DE-A1-102007 034 914
- DE-A1-102008 028 605
- JP-A- 11 127 554

## Beschreibung

In DE 27 45 980 A1 ist ein Getriebemotoraggregat beschrieben, das ein Schrägzahnrad und eine Schnecke umfaßt, die im Innern eines Gehäuses miteinander kämmen. Außerdem weist das Getriebemotoraggregat einen Außenläufermotor auf, dessen Ständer auf einer Hülse montiert ist, die Längsrippen aufweist und an einem Gehäuse befestigt ist. Ein Rotor des Außenläufermotors ist im Innern einer Trommel montiert, die ein Kühlflügelrad trägt und auf deren Außenfläche Bremsbacken wirken. Dabei bilden die Längsrippen der Hülse mit dem Stander Durchgangskanäle für Kühlluft.

Aus DE 41 00 903 A1 ist ein Schneckengetriebe mit angebautem Antriebsmotor bekannt. Das Schneckengetriebe weist 1 antriebsseitig eine Schneckenwelle, einen mit Schrauben an einem Schneckengetriebegehäuse angeschraubten Gehäusedeckel und eine Federdruckbremse auf. Die Federdruckbremse umfaßt besteht im wesentlichen aus Tellerfedern, eine lose Bremsscheibe und eine feste Bremsscheibe. Die Tellerfedern liegen einerseits an einer Ringschulter des Gehäusedeckels und andererseits an der losen Bremsscheibe an. Im Gehäusedeckel sind parallel zur Schneckenwellenachse ausgerichtete Stifte angeordnet, die in radial verlaufende Schlitze der losen Bremsscheibe eingreifen und diese axial führen. Die feste Bremsscheibe ist durch eine Paßfeder drehfest mit der Schneckenwelle verbunden. Ein in einer Ringnut der Schneckenwelle angeordnete Wellensicherungsring verhindert in Verbindung mit einem Zwischenring eine Verschiebung der festen Bremsscheibe in Richtung eines antriebsseitigen Endes der Schneckenwelle. Bei Montage der Federdruckbremse werden die Tellerfedern zusammengedrückt und in diesem Zustand durch den montierten Wellensicherungsring gehalten. Aus einer auf diese Weise erzeugten Vorspannung der Tellerfedern resultiert eine Bremskraft der Federdruckbremse.

DE 20 2004 007 282 U1 offenbart eine elektromagnetisch gelüftete Reibungs-Sicherheitsbremse zum Anbau an einen Antriebsmotor oder ein Getriebe mit einer drehfest in der Sicherheitsbremse angeordneten und relativ zu einem Bremsengehäuse axial verschiebbaren, federdruckbelasteten zweiteiligen Ankerscheibe. Benachbart zur zweiteiligen Ankerscheibe sind zwei Magnetspulen innerhalb des Bremsengehäuses angeordnet. Darüber hinaus ist eine umlaufende, topfartige Treibscheibe vorgesehen, die Teile der Sicherheitsbremse umhüllt und an ihrer ringförmigen Stirnseite mit einem axial verschiebbaren Bremsrotor drehfest verbunden ist. Dabei wird die zweiteilige Ankerscheibe bei ausbleibendem Strom der Magnetspulen von den Federkräften in Reibungseingriff mit dem Bremsrotor gedrückt. Das Bremsengehäuse umfaßt ein Lagerschild, das zur Aufnahme der Magnetspulen und von Federanordnungen dient. Außerdem weist das Lagerschild einen einseitig axial vorspringenden zentralen Ansatz zur Ausbildung eines äußeren distalen Lagerzapfens zur Lagerung der topfartigen Treibscheibe auf.

In US 4,406,340 ist ein Getriebemotor mit einer Bremseinheit beschrieben, dessen Rotor mit einer elastischen Welle verbunden ist. Die elastische Welle weist an einem Ende ein Ritzel auf, das mit Planetenrädern einer ersten Getriebestufe in Eingriff steht, und ist durch zwei Lager in einem mechanischen Zwischenelement gelagert, das zwischen Motor und Getriebe angeordnet ist. Das mechanische Zwischenelement weist eine mit den Planetenrädern der ersten Getriebestufe kämmende Innenverzahnung auf. Außerdem dient das mechanische Zwischenelement als Halterung für einen Planetenträger einer zweiten Getriebestufe. Planetenräder der zweiten Getriebestufe stehen in Eingriff mit einer innenverzahnten Radnabe, die einerseits einen Lagersitz für ein abtriebsseitiges Lager bildet und andererseits als Gehäuseteil für den Getriebemotor dient. Dabei sind zwischen der Radnabe und einer Abtriebswelle und zwischen der Radnabe und dem mechanischen Zwischenelement Dichtungsringe vorgesehen. An der Abtriebswelle ist darüber hinaus ein Ansatzstück angeordnet, das eine Bremsscheibe trägt. Die Bremsscheibe hat eine ausreichende Masse, um eine adiabatische Bremsung zu bewirken, ohne daß sich Unwuchtprobleme ergeben. Sämtliche Bauteile der Bremse sind außenliegend angeordnet, so daß eine hinreichende Kühlung thermisch belasteter Bauteile gewährleistet ist.

Ein gattungsgemäßer Getriebemotor mit den Merkmalen des Oberbegriffs des Anspruchs 1 ist bereits aus der 102007034914 A bekannt.

Der vorliegenden Erfindung liegt die Aufgabe zugrunde, einen Getriebemotor mit einer sicher zu betätigenden und ausreichend gekühlten Bremseinheit anzugeben.

Diese Aufgabe wird erfindungsgemäß durch einen Getriebemotor mit den in Patentanspruch 1 angegebenen Merkmalen gelöst. Vorteilhafte Weiterbildungen der vorliegenden Erfindung sind in den abhängigen Patentansprüchen angegeben.

Der erfindungsgemäße Getriebemotor umfaßt eine Getriebeeinheit und eine an diese angeflanschte Motoreinheit. Außerdem ist eine mit einer Motorwelle gekoppelte Bremseinheit vorgesehen, die über einen Handhebel betätigbar ist. Diese Bremseinheit kann beispielsweise als Notfallbremsvorrichtung zusätzlich zu einer elektromagnetischen Bremse der Motoreinheit vorgesehen sein. Eine Lüfterhaube, welche die über den Handhebel betätigbare Bremseinheit sowie ein mit der Motorwelle drehfest verbundenes Lüfterrad umgibt, weist eine längliche Öffnung auf. Durch diese Öffnung tritt der Handhebel aus der Lüfterhaube. Die längliche Öffnung ist durch eine Drehscheibe verschlossen, die zentrisch um einen neben der länglichen Öffnung angeordneten Drehpunkt drehbar ist und an ihrem Umfang eine sich radial erstreckende Aussparung für den Handhebel aufweist. Auf diese Weise ist ein Schutz vor Verletzungen und gegenüber eindringenden Fremdkörpern im Bereich des Handhebels an der Lüfterhaube sichergestellt.

Die längliche Öffnung in der Lüfterhaube ist durch die Drehscheibe auch bei Betätigung des Handhebels vorzugsweise im wesentlichen komplett verschlossen. Zusätzlich oder alternativ dazu kann zwischen der Drehscheibe und dem Handhebel im Bereich der Aussparung der Drehscheibe ein Spalt für eine zusätzliche Belüftung der Bremseinheit über die längliche Öffnung an der Lüfterhaube gebildet sein. Dies ermöglicht eine verbesserte Belüftung der Bremseinheit, ohne daß hierdurch ein Berührschutz oder ein Schutz gegenüber eindringenden Fremdkörpern beeinträchtigt wird. Dabei ist ein Schutz vor Berührung und Fremdkörpereindingung an der Lüfterhaube vorzugsweise allein durch die Drehscheibe gebildet.

Entsprechend einer bevorzugten Ausgestaltung der vorliegenden Erfindung ist das Lüfterrad als Axiallüfter ausgebildet und strömt in rotierendem Zustand die Motoreinheit an. Auf diese Weise ergibt sich ein besonders wirksames integriertes Kühlungskonzept, das sowohl Motor- und Bremseinheit als auch die Getriebeeinheit umfaßt.

Die vorliegende Erfindung wird nachfolgend an einem Ausführungsbeispiel anhand der Zeichnung näher erläutert. Es zeigt
- Figur 1: einen Getriebemotor mit Getriebeeinheit, Motoreinheit und Bremseinheit in perspektivischer Darstellung,

- Figur 2: die Motoreinheit und die Bremseinheit des Getriebemotors gemäß Figur 1 in Schnittdarstellung,
- Figur 3: die Bremseinheit gemäß Figur 2 in einer Detaildarstellung,
- Figur 4: eine die Bremseinheit gemäß Figur 3 umgebende Lüfterhaube.

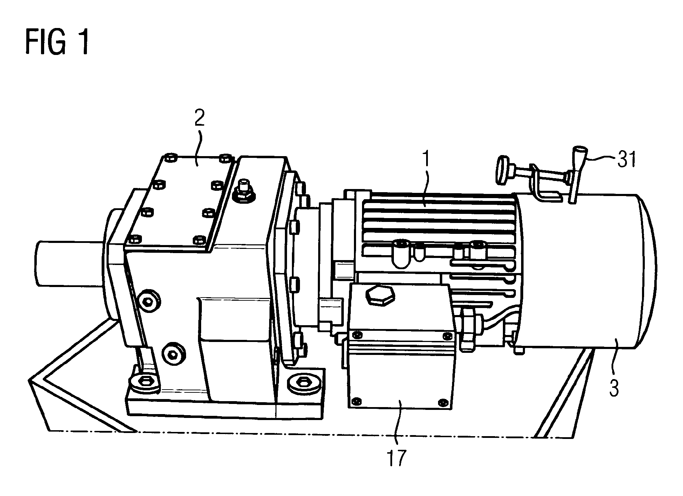

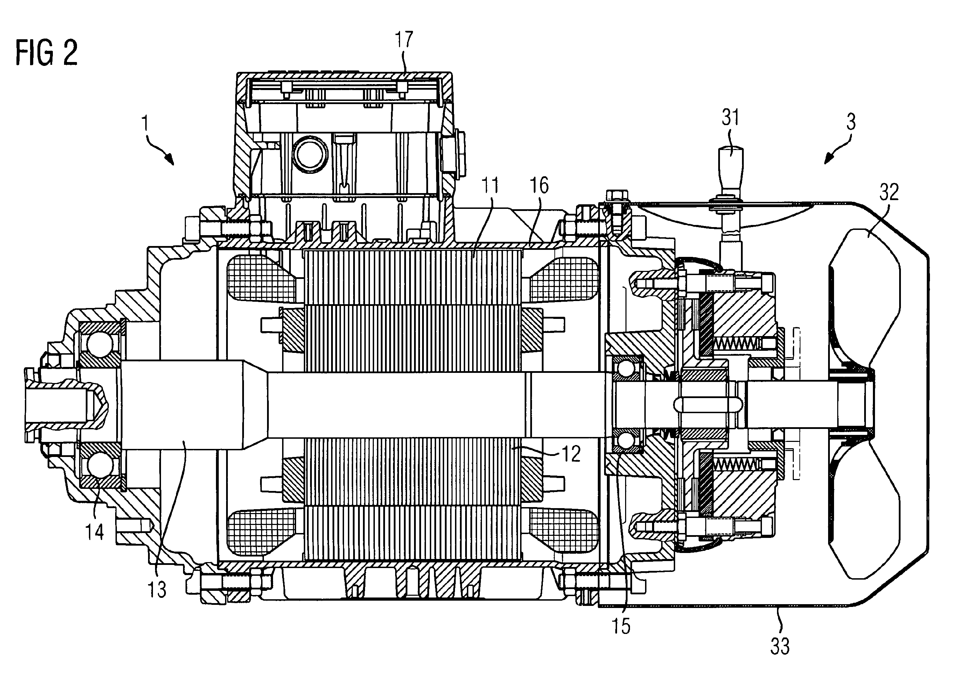

Der in Figur 1 dargestellte Getriebemotor umfaßt eine Getriebeeinheit 2 und eine an diese angeflanschte Motoreinheit 1. An der Motoreinheit 1 ist eine über einen Handhebel 31 betätigbare Bremseinheit 3 montiert. Entsprechend der Schnittdarstellung in Figur 2 umfaßt die Motoreinheit 1 einen Stator 11 und einen drehfest mit einer Motorwelle 13 verbundenen Rotor 12. Mit der Motorwelle 13 ist außerdem ein Lüfterrad 32 drehfest verbunden, das gemeinsam mit der Bremseinheit 3 innerhalb einer Lüfterhaube 33 angeordnet ist. Das Lüfterrad 32 ist im vorliegenden Ausführungsbeispiel als Axiallüfter ausgebildet und strömt in rotierendem Zustand die Motoreinheit 1 und die Bremseinheit 3 an.

Die Motorwelle 13 ist mittels eines getriebeseitigen Lagers 14 und mittels eines lüfterseitigen Lagers 15 in einem Motorgehäuse 16 gelagert. Am Motorgehäuse 16 ist darüber hinaus ein Klemmenkasten 17 für elektrische Anschlüsse der Motoreinheit 1 befestigt.

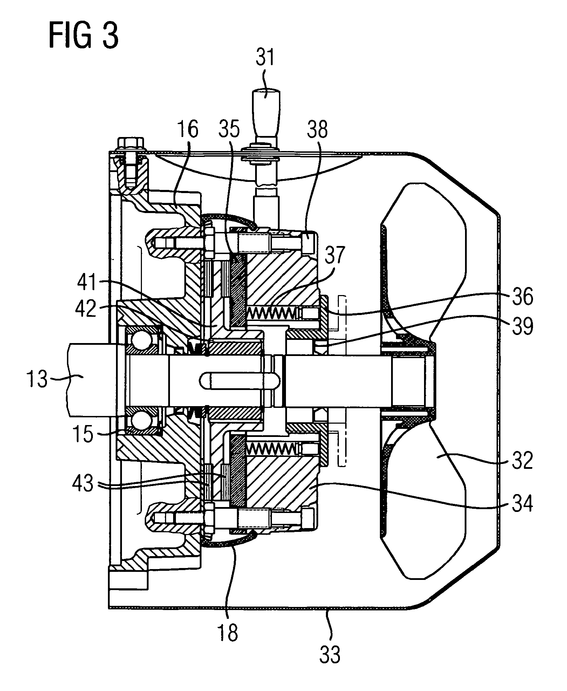

Entsprechend der Detaildarstellung in Figur 3 umfaßt die Bremseinheit 3 einen mittels Befestigungsschrauben 38 drehfest mit dem Motorgehäuse 16 verbundenen Bremsstator 35 und einen mittels einer Kurzverzahnung 42 drehfest mit der Motorwelle 13 verbundenen scheibenartigen Bremsrotor 41. An Stirnseiten des Bremsrotors 41 sind Bremsbeläge 43 befestigt, die durch Axialverschiebung des Bremsstators 35 in eine reibschlüssige Verbindung mit dem Motorgehäuse 16 und dem Bremsstator 35 gebracht werden können. Zwischen dem Motorgehäuse 16 und der Kurzverzahnung 42 ist konzentrisch zur Motorwelle 13 eine Tellerfeder 44 angeordnet, die den Bremsrotor 41 in einem unbetätigten Zustand der Bremseinheit 3 in einem definierten axialen Abstand zum Motorgehäuse 16 hält.

Der Handhebel 31 ist mit einem die Motorwelle 13 konzentrisch umgebenden Bremsflansch 34 fest verbunden, an dem eine mit einem Flansch versehene Hülse 36 befestigt ist, die gegenüber dem Bremsstator 35 mittels mehrerer Spannfedern 37 vorgespannt ist. Durch Bewegung des Handhebels 31 kann der Bremsstator 35 somit axial verschoben werden.

Zwischen der Motorwelle 13 und der mit einem Flansch versehenen Hülse 36 ist ein Wellendichtring angeordnet. Darüber hinaus ist im vorliegenden Ausführungsbeispiel zwischen dem Motorgehäuse 16 und dem Bremsflansch 34 eine Dichtungsmanschette angeordnet. Auf diese Weise ist die Bremseinheit 3 vor eindringendem Staub, Feuchtigkeit oder sonstigen Verunreinigungen geschützt.

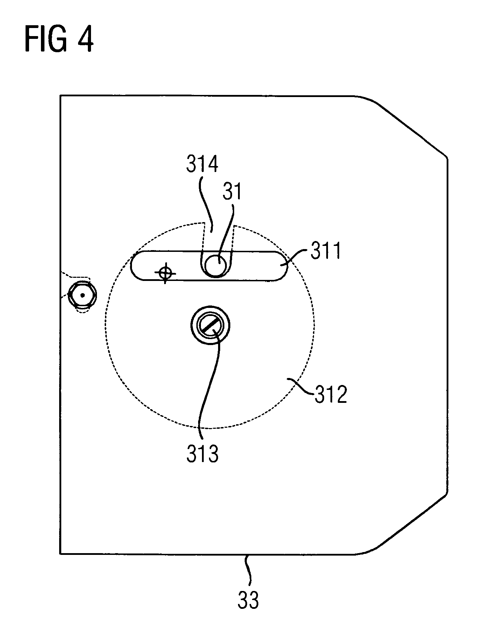

Anhand von Figur 4 ist zu erkennen, daß die Lüfterhaube 33 eine längliche Öffnung 311 aufweist, durch die der Handhebel 31 aus der Lüfterhaube 33 tritt. Die längliche Öffnung 311 ist durch eine Drehscheibe 312 verschlossen, die zentrisch um einen neben der länglichen Öffnung 311 angeordneten Drehpunkt 313 drehbar ist. Darüber hinaus weist die Drehscheibe 312 an ihrem Umfang eine sich radial erstreckende Aussparung 314 für den Handhebel 31 auf. Auf diese Weise ist durch die Drehscheibe 312 ein Schutz vor Berührung und Fremdkörpereindingung an der Lüfterhaube 33 gebildet. Die längliche Öffnung 311 in der Lüfterhaube 33 ist durch die Drehscheibe 312 auch bei Betätigung des Handhebels 31 im wesentlichen komplett verschlossen.

Im vorliegenden Ausführungsbeispiel ist zwischen der Drehscheibe 312 und dem Handhebel 31 im Bereich der Aussparung 314 der Drehscheibe 312 ein Spalt für eine zusätzliche Belüftung der Bremseinheit 3 über die längliche Öffnung 311 an der Lüfterhaube 33 gebildet. Die über den Handhebel 31 betätigbare Bremseinheit 3 ist als Notfallbremsvorrichtung zusätzlich zu einer elektromagnetischen Bremse der Motoreinheit 1 vorgesehen, die in den Figuren nicht explizit dargestellt ist.

Die Anwendung der vorliegenden Erfindung ist nicht auf das beschriebene Ausführungsbeispiel beschränkt.

## Patentansprüche

1. Getriebemotor mit
- einer Getriebeeinheit und einer an diese angeflanschten Motoreinheit,
- einer mit einer Motorwelle gekoppelten Bremseinheit, die über einen Handhebel betätigbar ist,
- einer die Bremseinheit sowie ein mit der Motorwelle drehfest verbundenes Lüfterrad umgebenden Lüfterhaube, die eine längliche Öffnung aufweist, durch die der Handhebel aus der Lüfterhaube tritt, **gekennzeichnet, durch**
- eine die längliche Öffnung verschließende Drehscheibe, die zentrisch um einen neben der länglichen Öffnung angeordneten Drehpunkt drehbar ist und an ihrem Umfang eine sich radial erstreckende Aussparung für den Handhebel aufweist.

2. Getriebemotor nach Anspruch 1,
bei dem das Lüfterrad als Axiallüfter ausgebildet ist und in rotierendem Zustand die Motoreinheit anströmt.

3. Getriebemotor nach einem der Ansprüche 1 oder 2,
bei dem durch die Drehscheibe ein Schutz vor Berührung und Fremdkörpereindingung an der Lüfterhaube gebildet ist.

4. Getriebemotor nach einem der Ansprüche 1 bis 3,
bei dem die längliche Öffnung in der Lüfterhaube durch die Drehscheibe auch bei Betätigung des Handhebels im wesentlichen komplett verschlossen ist.

5. Getriebemotor nach einem der Ansprüche 1 bis 4,
bei dem zwischen der Drehscheibe und dem Handhebel im Bereich der Aussparung der Drehscheibe ein Spalt für eine zusätzliche Belüftung der Bremseinheit über die längliche Öffnung an der Lüfterhaube gebildet ist.

6. Getriebemotor nach einem der Ansprüche 1 bis 5,
bei dem die über den Handhebel betätigbare Bremseinheit als Notfallbremsvorrichtung zusätzlich zu einer elektromagnetischen Bremse der Motoreinheit vorgesehen ist.

## Claims

1. Gearmotor having
- a gear unit and a motor unit flanged hereon,
- a braking unit coupled to a motor shaft, which can be actuated by way of a hand lever,
- a fan cover surrounding the braking unit and a fan wheel rotatably connected to the motor shaft, said fan cover having a elongated opening through which the hand lever emerges from the fan cover,
**characterised by**
- a disc closing the elongated opening, which can be rotated centrically about a centre of rotation arranged adjacent to the elongated opening and includes a radially extending recess for the hand lever on its periphery.

2. Gearmotor according to claim 1,
in which the fan wheel is embodied as an axial fan and flows onto the motor unit in a rotating state.

3. Gearmotor according to one of claims 1 or 2,
in which the disk protects against contact and the penetration of foreign bodies into the fan cover.

4. Gearmotor according to one of claims 1 to 3,
in which the elongated opening in the fan cover is essentially completely closed by the disc even when actuating the hand lever.

5. Gearmotor according to one of claims 1 to 4,
in which a gap for an additional ventilation of the braking unit is formed across the elongated opening on the fan cover between the disc and the hand lever in the region of the recess of the disc.

6. Gearmotor according to one of claims 1 to 5,
in which the braking unit which can be actuated by way of the hand lever is provided as an emergency braking apparatus in addition to an electromagnetic brake of the motor unit.

## Revendications

1. Moteur à engrenage comprenant
- une unité d'engrenage et un groupe moteur qui y est bridé,
- une unité de freinage qui est couplée à un arbre du moteur et qui peut être actionnée par un levier à main,
- un capotage de ventilateur qui entoure l'unité de freinage ainsi qu'une roue de ventilateur solidaire en rotation de l'arbre du rotor et qui a une ouverture oblongue, par laquelle le levier à main sort du capotage du ventilateur, **caractérisé par**
- un disque tournant qui ferme l'ouverture oblongue, qui peut tourner de manière centrée autour d'un point de rotation disposé à côté de l'ouverture oblongue et qui a sur son pourtour un évidement s'étendant radialement pour le levier à main.

2. Moteur à engrenage suivant la revendication 1,
dans lequel la roue du ventilateur est constituée en ventilateur axial et souffle dans le groupe moteur lorsqu'elle tourne.

3. Moteur à engrenage suivant l'une des revendications 1 ou 2, dans lequel il est formé par le disque tournant une protection vis-à-vis d'un contact et vis-à-vis d'une pénétration de corps étrangers sur le capotage du ventilateur.

4. Moteur suivant l'une des revendications 1 à 3,
dans lequel l'ouverture oblongue dans le capotage du ventilateur est fermée par le disque tournant d'une manière sensiblement complète, même lorsque le levier à main est actionné.

5. Moteur suivant l'une des revendications 1 à 4,
dans lequel il est formé, entre le disque tournant et le levier à main, dans la zone de l'évidement du disque tournant, un intervalle pour une alimentation en air supplémentaire de l'unité de freinage par l'ouverture oblongue sur le capotage du ventilateur.

6. Moteur suivant l'une des revendications 1 à 5,
dans lequel l'unité de freinage, qui peut être actionnée par le levier à main, est prévue sous la forme d'un dispositif de freinage en cas d'urgence en plus d'un frein électromagnétique du groupe moteur.
